Europäisches Patentamt

European Patent Office

Office européen des brevets

(11) Publication number: **0 082 978**
**B1**

(12) **EUROPEAN PATENT SPECIFICATION**

(45) Date of publication of patent specification: **10.09.86**

(21) Application number: **82111117.6**

(22) Date of filing: **02.12.82**

(51) Int. Cl.⁴: **B 41 J 3/16,** G 01 D 15/06

(54) **Circuit for controlling a multi-wire printhead.**

(30) Priority: **29.12.81 US 335481**

(43) Date of publication of application:
**06.07.83 Bulletin 83/27**

(45) Publication of the grant of the patent:
**10.09.86 Bulletin 86/37**

(84) Designated Contracting States:
**DE FR GB**

(56) References cited:
**DE-A-2 648 028**
**GB-A-1 221 622**
**US-A-3 846 801**
**US-A-4 181 912**
**US-A-4 183 032**
**US-A-4 186 406**

**Techn.Mitt.AEG-Telefunken, 64 (1974), S. 193-197**

(73) Proprietor: **International Business Machines Corporation**
**Old Orchard Road**
**Armonk, N.Y. 10504 (US)**

(72) Inventor: **Galetto, Louis Valentine**
**6017-204 Lake Forest Road**
**Charlotte, NC 28212 (US)**
Inventor: **Rakes, James Mitchell**
**Route 3 Box 21C**
**Leander, TX 78641 (US)**

(74) Representative: **Vekemans, André**
**COMPAGNIE IBM FRANCE Département de Propriété Industrielle**
**F-06610 La Gaude (FR)**

Courier Press, Leamington Spa, England.

## Description

The present invention relates to improvement in a driver circuit for a multi-wire printhead for electroerosion printing.

Electroerosion printing is a high speed, low power consumption, low noise printing technology which requires special coated paper. The paper base is coated with ink, which is in turn covered with a 200—400 Angstrom thick coating of aluminum. Passing current through a wire (which may be tungsten) in an electroerosion printhead creates heat at the wire aluminum interface sufficient to melt and vaporize the aluminum thereby exposing the ink beneath the aluminum.

The melting and vaporizing of the aluminum produces a voltage discharge between the aluminum surface and the tungsten wire. The entire process occurs in or about ten microseconds. The area of ink exposed by the removal of the aluminum is the dot or portion of the character or symbol to be formed. With proper contact pressure and energy input, dot configuration corresponds to the tungsten wire element cross-section.

In a page-width multi-wire printhead many hundred wires are provided in a one-dimensional array. Individual wires are energized to form portions of symbols to appear in a line across the entire page. The page is then advanced and the wires energized again to form the next row of dots in the row of symbols being produced.

U.S. Patent 3,846,801 relates to electrographic drawing apparatus comprising a multiplicity of writing electrodes in contact with electrosensitive paper. The signals are distributed to the respective electrodes by time division multiplexers. Electrodes are preferably energized in a progressive sequence in which each is connected for energization after the preceding one in line.

U.S. Patent 3,732,573 relates to an electrographic printer having a multiplex matrix driving circuit which reduces the number of switches needed to drive the stylii.

Document Techn. Mitt AEG-TELEFUNKEN, 64 (1974), pages 193—197 describes an electrosensitive matrix printer wherein a single current going from a positive potential to another potential, which seems to be a zero potential. Depending upon whether a particular switch is open or closed, that current will flow to the paper through the print wire or through another, short-circuit, path.

In contrast to that, the invention provides for two different currents, one which is used for making a mark (write electrodes) and goes from ground potential to a negative potential through the paper and the print wire and another one used for avoiding making a mark (non-write electrodes) which goes from a positive potential to the negative potential through the print wire but not through the paper. The invention provides a true bypass arrangement, not a short circuit. This appears to be a far safer arrangement to avoid making a mark on the paper with non-write electrodes.

Furthermore, the present invention provides a technique for multiplexing drivers of a plurality of wires in a one-dimension array for electroerosion printing which results in a significant reduction in component cost.

The object of the invention is on the one hand provided by a control circuit for selectively energizing individual wires in an electroerosion print head for forming marks on metal coated paper including a plurality of wires arranged in M groups having an equal number N of wires, M selector transistor switches for selecting a group M of wires and N transistor switches for selecting individual wires in each group 1 up to M, characterized in that it comprises: means for activating selectively said selector transistors for generating a first current from ground through the metal coated paper, each selected wire and the corresponding selector transistor into a negative potential source to make a mark; and means for activating selectively said transistor switches for generating a second current from a positive potential source through the corresponding transistor switch and the corresponding selector transistor into the negative potential source, bypassing the paper wire junction in the form of a current shunt line to avoid making a mark.

On the other hand, the object of the invention is achieved by the method as is claimed in claim 5.

Brief Description of the Drawing

Fig. 1 is a schematic illustration of an electroerosion printer.

Fig. 2 represents the driver circuit for print head of the electroerosion printer of Fig. 1.

Fig. 3 is a timing diagram of the operation of the circuit of the present invention.

Fig. 4 illustrates a possible modification to the circuit of the present invention.

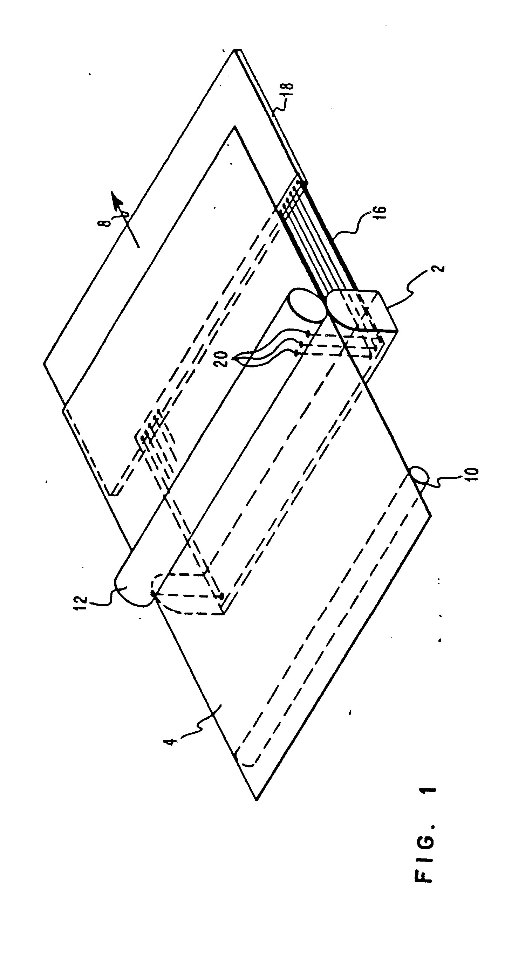

Refer now to Fig. 1 which schematically shows a printer in which the present invention may be embodied. Multi-wire printhead 2 is positioned so that its operating face is in contact with the aluminum coating on paper 4. In this illustration head 2 is stationary while paper moves across it in the direction of arrow 8. Grounding bar 10 provides a source potential from which to pull current thru the print wires into a large negative potential and minimizes operator safety hazards. Platen 12 is provided to maintain proper contact pressure between printhead 2 and aluminum paper 4. Flat cable 16 is provided to connect electronic controls 18 to the individual tungsten wires 20 of head 2.

Printhead 2 is provided with, for example, 800 individual wires which may be controlled in 40 groups of 20 each. The head 2 may be constructed of tungsten wire in accordance with E.P.A. 0 053 706.

Only the operative elements of an electroerosion printer are shown schematically in Fig. 1. It is to be understood that such a basic printer or other designs may be used.

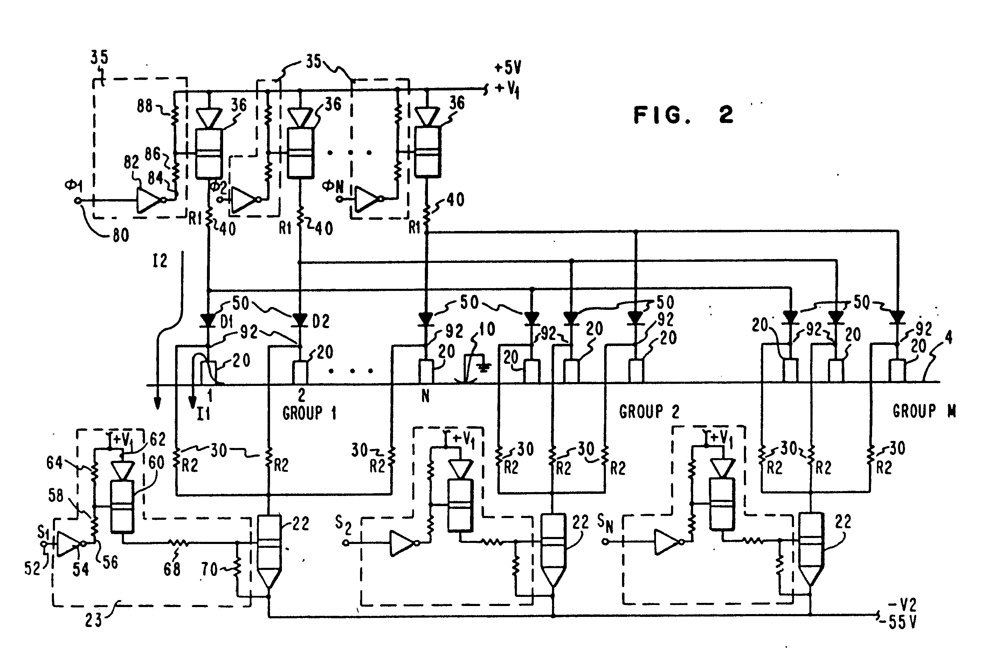

Refer now to Fig. 2 which represents the driver circuit of the present invention. Fig. 2 schematically shows the print wires 20 making up the multi-wire head at the surface of aluminum coated paper 4. The print wires are for energization purposes grouped in M groups having N wires each. Each individual wire 20 is at ground potential where it contacts aluminum paper 4 as a result of grounding bar 10. A number M of NPN selector transistors 22, of which three are shown, are provided in a number to correspond with the number of groups into which the individual wires 20 are divided. Selector transistors 22 are each connected to a negative potential V2 of −55 volts. N print wires 20 are connected in parallel through equal resistors 30 to selector transistors 22.

A number N of PNP transistor switches 36 are provided and are connected through resistor 40 to the wire 20 in each group corresponding to that transistor. That is, the Nth print wire in each group M is connected to the Nth PNP transistor switch 36. The N PNP transistor switches 36 are connected to a source of positive potential V1 of 5 volts. Each print wire 20 is further provided with a diode 50 for isolating a particular print wire from the similarly positioned print wires in other groups.

Each group selector transistor 22 is activated by a level shift circuit. For purposes of clarity only, the level shift circuit 23 associated with group selector transistor 22 corresponding to group 1 will be described in detail. A selector signal S1 is applied to terminal 52 when it is desired to activate transistor 22 and select group 1 print wires. Signal S1 is developed by a symbol generator or the like in a conventional manner. That signal is inverted in inverter 54. The inverted signal on line 56 passes resistor 58 and is applied to transistor 60. A source of positive voltage of 5 volts is connected to line 62 which also includes resistor 64. The voltage from transistor 60 drops across resistor 68 and is applied to transistor 22 and branches over across resistor 70 and is then applied to the negative potential V2 of 55 volts.

Similarly, each transistor switch 36 is provided with an activation circuit 35. Again, for simplicity, only one activation circuit 35 will be described. Each activation circuit 35 is energized by symbol generating means (not shown). A $\Phi_1$ signal is applied at terminal 80. The signal is inverted in inverter 82. The inverted signal on line 84 passes resistor 86 and is applied to transistor switch 36. The source of positive voltage V1 of 5 volts is also connected to transistor switch 36 and passes resistor 88 thereby activating transistor switch 36.

Dots are formed by creating a current source from ground through the aluminum coating on the paper into the print wire 20 and then being sent to large negative potential. In Fig. 2 this current is represented by arrow I1 and equals −V2/R2. Formation of a dot is prevented by providing an alternate current source represented by the arrow I2 and equals V1/R1 which bypasses the print wire 20 paper 4 junction and satisifies the requirements of the current source established by −V2 and R2.

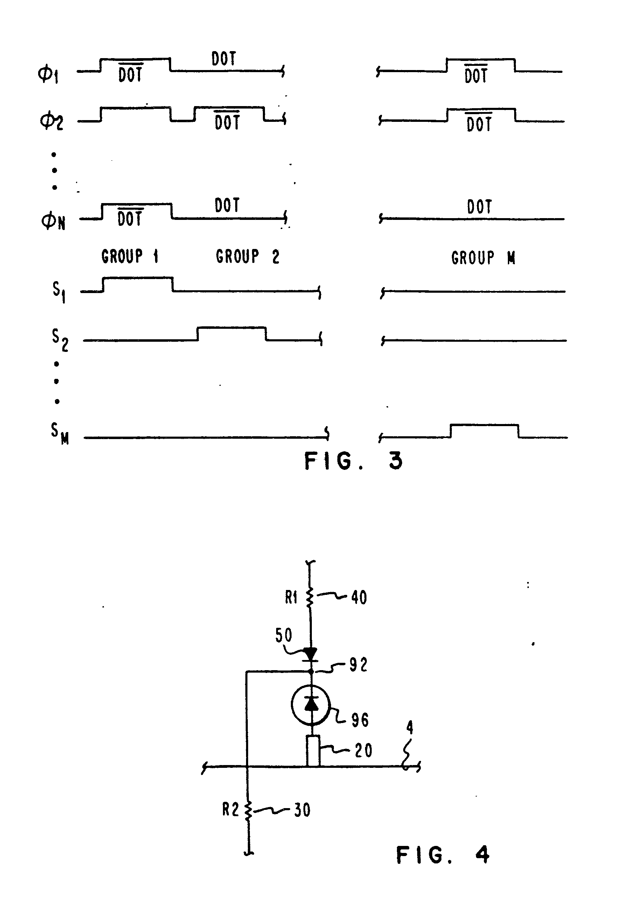

The operation of the driver circuit of the present invention may be more readily understood having reference to the timing diagram shown in Fig. 3. The logic signals shown in Fig. 3 represent the selector signals applied to selector transistor 22 and the signals applied to transistor switches 36 and graphically illustrate dot formation on an entire line. The $\Phi_1$, $\Phi_2$ and $\Phi_N$ lines represent the signals applied to the activation circuits 35 in Fig. 2. When all transistor switches 36 are on, no dots are formed. When a group selector transistor 22 has been activated, but the $\Phi_1$ and $\Phi_N$ transistors switches 36 are down than a dot formed by the first and Nth print wire within said group.

When a particular transistor switch 36 is turned on to avoid forming a dot, the ratio of resistor R1 40 to R2 30 must be such that approximately zero potential is established at point 92 in the circuit for driving each individual print wire. That is, at the point where the current shunt line branches from the line which leads directly to each individual print wire 20. For an electrical pulse width of 10—15 microseconds duration, a magnitude of approximately plus or minus 20 volts must be present across the wire-paper contact to sustain vaporization of the aluminum coating on paper 4. Hence, if the potential at points 92 is kept below this threshold voltage no blocking diode 96 (see Fig. 4) is needed between point 92 and the print wire 20 (Fig. 2) to prevent undesired dot formation.

It is the elimination of this requirement, that is another diode for every print wire, which accounts for a portion of the significant cost savings in driving an electroerosion multi-wire printhead in accordance with the present invention. Only two components-isolating diode 50 and resistor R2 30 (Fig. 2) are required for each and every print wire 20. In high resolution multi-wire printheads with hundreds of print wires the saving is obvious. This current shunting technique as employed in the present invention can reduce the number of transistors required from the conventional one per print wire to 2 times the square root of the number of wires.

The circuit of Fig. 2 operates by firing or not firing a number of wires in a particular group M at any given time. The group is selected by turning on one of the selector transistors (22) by applying the selector signal $S_1$, $S_2$, $S_n$. All of the transistor switches 36, of which three are shown within that group, are turned on unless a dot is to be printed. If dot formation is desired then that particular transistor switch is turned off.

## Claims

1. A control circuit for selectively energizing individual wires (20) in an electroerosion printhead for forming marks on metal coated paper (4) including a plurality of wires (20) arranged in M groups having an equal number N of wires, M selector transistors (22) for selecting a group M of wires and N transistor switches (36) for selecting individual wires (20) in each group 1 up to M, characterized in that it comprises:

means (23) for activating selectively said selector transistors for generating a first current (I1) from ground through the metal coated paper (4), each selected wire and the corresponding selector transistor (22) into a negative potential source (−V2) to make a mark; and

means (35) for activating selectively said transistor switches for generating a second current (I2) from a positive potential source (V1) through the corresponding transistor switch (36) and the corresponding selector transistor (22) into the negative potential source (−V2), bypassing the paper wire junction in the form of a current shunt line to avoid making a mark.

2. The circuit of claim 1 characterized in that for generating the said second current there is provided a first resistor (R1) located between said positive potential and said bypass point (92), and a second resistor (R2) located between said bypass point (92) and said negative potential, the ratio of the values of said first (R1) and second (R2) resistors being such that the potential at said bypass point (92) is approximately zero when said first and said second current are flowing.

3. The circuit of claim 2 wherein each transistor (36) is connected to all correspondingly positioned print wires (20) in groups 1 up to M.

4. The circuit of claim 3 wherein said transistors (22) are each connected in parallel to a different group 1 up to M of N print wires.

5. A method for controlling the firing of individual wires in a multi-wire print head to make marks on metal coated paper characterized in that it comprises the steps of:

generating a first current (I1) from ground through the metal coated paper, a wire and via a bypass point (92) into a source of negative potential (−V2) to make a mark; and

generating a second current (I2) bypassing the wire metal coated paper boundary from a source of positive potential (+V1) through said bypass point into said source of negative potential to avoid making a mark.

6. The method of claim 5 characterized in that it comprises the additional steps of:

arranging the print wires in M groups of N wires each, M × N being equal to the total number of wires;

providing N wire selection means (36), connected to a source of positive potential (+V1), each said wire selection means being connected to the correspondingly ordered wire N in each group M; and

providing M group selection means (22), connected to a source of negative potential (−V2), each said group selection means being connected to a different group of N wires.

7. The method of claim 5 or 6 characterized in that it includes the additional steps of:

providing for each print wire (20) an isolating diode (50) to isolate each print wire from the correspondingly ordered print wires in other groups M.

**Patentansprüche**

1. Steuerkreis zum selektiven Anlegen einer Spannung an einzelne Drähte (20) in einem Elektroerosionsdruckopf für die Herstellung von Marken auf metallbeschichtetem Papier, mit einer Mehrzahl von Drähten (20), die in M Gruppen mit gleicher Drahtanzahl N angeordnet sind, M Auswahltransistoren (22) für die Auswahl einer Drahtgruppe N und N Transistorschalter (36) für die Auswahl einzelner Drähte (20) in jeder Gruppe 1 bis M, dadurch gekennzeichnet, dass sie enthält:

Mittel (23) für die selektive Aktivierung der besagten Auswahltransistoren zum Erzeugen eines ersten Stroms (I1) von der Erde durch das metallbeschichtete Papier (4), wobei jeder ausgewählte Draht und der entsprechende Auswahltransistor (22) an eine Quelle mit negativem Potential (−V2) gelegt werden, um eine Marke zu erzeugen; und

Mittel (35) für die wahlweise Aktivierung der besagten Transistorschaltung zum Erzeugen eines zweiten Stromes (I2) von einer positiven Potentialquelle (V1) durch den entsprechenden Transistorschalter (36) und den entsprechenden Transistorwählschalter (22) in die negative Potentialquelle (−V2), mit Umgehung der Verbindung Drah-Papier in form einer Stromnebenschlussleitung, um die Erzeugung einer Marke zu vermeiden.

2. Schaltung gemäss Anspruch 1, dadurch gekennzeichnet, dass zur Generierung des besagten zweiten Stroms ein erster Widerstand (R1) zwischen dem besagten positiven Potential und dem besagten Bypass Punkt (92) angeordnet ist, und ein zweiter Widerstand (R2) zwischen dem besagten Bypass Punkt (92) und dem besagten negativen Potential angeordnet ist, wobei das Verhältnis der Werte besagten ersten (R1) und zweiten (R2) Widerstandes so gewählt ist, dass das Potential an besagtem Bypass Punkt (92) annähernd Null beträgt, wenn der erste und der zweite Strom fliessen.

3. Schaltung gemäss Anspruch 1, in der jeder Transistor (36) an alle entsprechende positionierten Druckdrähte (20) in den Gruppen 1 bis M angeschlossen ist.

4. Schaltung gemäss Anspruch 3, in der die besagten Transistoren (22) alle parallel zu einer jeweils anderen Gruppe 1 bis M von N Drähten angeschlossen sind.

5. Verfahren zum Steuern des Einsatzes der einzelnen Drähte in einem Mehrdraht-Druckkopf, um Zeichen auf metallbeschichtetem Papier zu erzeugen, dadurch gekennzeichnet, dass es folgende Schritte enthält:

Erzeugung eines ersten Stroms (I1) von der Erde durch das metallbeschichtete Papier, einen Draht und über einen Bypasspunkt (92) in eine Quelle negativen Potentials (−V2), um eine Marke zu erzeugen; und

Erzeugung eines zweiten Stroms (I2), der um die Grenze des metallbeschichteten Papiers umgeleitet wird, von einer Quelle positiven Potentials (+V1) durch den besagten Bypasspunkt in die besagte Quelle negativen Potentials, um die Erzeugung einer Marke zu vermeiden.

6. Verfahren gemäss Anspruch 5, dadurch gekennzeichnet, dass es die folgenden zusätzlichen Schritte enthält:

Anordnung der Druckdrähte in M Gruppen von je N Drähten, wobei M × N gleich der Gesamtdrahtzahl ist;

Bereitstellung von M Drahtauswahlmitteln (36) angeschlossen an eine Quelle positiven Potentials (+V1), wobei jedes besagte Drahtauswahlmittel an den entsprechend zugeordneten Draht N in jeder Gruppe M angeschlossen ist; und

Bereitstellung von M Gruppenauswahlmitteln (22) angeschlossen an eine Quelle negativen Potentials (−V2), wobei jedes Gruppenauswahlmittel an eine jeweils andere Gruppe von N Drähten angeschlossen ist.

7. Methode gemäss Anspruch 5 oder 6, dadurch gekennzeichnet, dass sie die zusätzlichen Schritte enthält: Bereitsstellung einer Isolierdiode (50) für jeden Druckdraht (20), um jeden Druckdraht von den entsprechend angeordneten Druckdrähten in der Gruppe M zu isolieren.

**Revendications**

1. Circuit de commande pour exciter de façon sélective les différents fils (20) d'une tête d'impression du type à électroérosion pour former des marques sur du papier métallisé (4), lesdits fils (20) étant répartis en M groupes comportant chacun un même nombre N de fils, ladite tête comportant M transistors de sélection (22) pour sélectionner un groupe M donné de fils et N transistors de commutation (36) pour sélectionner des fils (20) donnés dans chacun des groupes 1 à M, caractérisé en ce qu'il comprend:

des moyens (23) pour rendre conducteurs de façon sélective lesdits transistors de sélection afin d'engendrer, depuis la masse, un premier courant (I1) dirigé, en traversant le papier métallisé (4) et en passant par chaque fil sélectionné et par le transistor de sélection (22) correspondant, vers une source de potentiel négatif (−V2) de façon à former une marque; et

des moyens (35) pour rendre conducteurs de façon sélective lesdits transistors de commutation afin d'engendrer, depuis une source de potentiel positif (V1), un second courant (I2) dirigé, en passant par le transistor de commutation (36) et le transistor de sélection (22) correspondants, vers la source de potentiel négatif (−V2), en évitant la jonction papier/fil et en constituant une ligne de shuntage de courant de façon à éviter la formation d'une marque.

2. Circuit selon la revendication 1, caractérisé en ce qu'il comprend, aux fins de la génération dudit second courant, une première résistance (R1) située entre ladite source de potentiel positif et un point d'évitement (9)2, et une seconde résistance (R2) située entre ledit point d'évitement (92) et ladite source de potentiel négatif, le rapport de la valeur de ladite première résistance (R1) à celle de ladite seconde résistance (R2) étant tel que le potentiel présent audit point d'évitement (92) est approximativement nul lorsque lesdits premier et second courants circulent.

3. Circuit selon la revendication 2, caractérisé en ce que chacun des transistors (36) est connecté au fil d'impression (20) de rang correspondant dans chacun des groupes 1 à M.

4. Circuit selon la revendication 3, caractérisé en ce que chacun desdits transistors (22) est connecté en parallèle à un groupe différent 1 à M de N fils d'impression.

5. Procédé pour commander l'excitation des différents fils d'une tête d'impression à fils multiples afin de former des marques sur du papier métallisé, caractérisé en ce qu'il comprend les étapes suivantes consistant à:

engendrer un premier courant (I1) depuis la masse, ledit courant étant dirigé, en traversant le papier métallisé et en passant par un fil et par un point d'évitement (92), vers une source de potentiel négatif (−V2) afin de former une marque; et

engendrer un second courant (I2) depuis une source de potentiel poasitif (+V1) en évitant la jonction fil/papier métallisé, ledit courant étant dirigé, en passant par ledit point d'évitement, vers ladite source de potentiel négatif afin d'eviter la formation d'une marque.

6. Procédé selon la revendication 5, caractérisé en ce qu'il comprend en outre les étapes suivantes consistant à:

disposer les fils d'impression en M groupes de N fils chacun, M × N étant égal au nombre total de fils;

fournir N moyens (36) de sélection de fil connectés à une source de potentiel positif (+V1), chacun desdits moyens étant connecté au fil N de rang correspondant dans chacun des M groupes; et

fournir M moyens (22) de sélection de groupe connectés à une source de potentiel négatif (−V2), chacun desdits moyens étant connecté à un groupe différent de N fils.

7. Procédé selon la revendication 5 ou 6, caractérisé en ce qu'il comprend en outre l'étape suivante consistant à: associer à chaque fil d'impression (20) une diode d'isolement (50) afin de l'isoler des fils de rang correspondant dans les autres groupes M.

FIG. 1

FIG. 2

FIG. 3

FIG. 4